# EUROPEAN PATENT SPECIFICATION

(11) **EP 3 782 494 B1**
(45) Date of publication and mention of the grant of the patent: **28.06.2023**
(21) Application number: 19789378.7
(22) Date of filing: 18.01.2019
(51) Int. Cl.: A41D 13/01, A42B 3/00, B60Q 1/26, B60Q 1/52, B60Q 7/00

(54) **ROAD-TRAFFIC WARNING SYSTEM FOR INCREASING USER SAFETY**
STRASSENVERKEHRSWARNSYSTEM ZUR ERHÖHUNG DER BENUTZERSICHERHEIT
SYSTÈME DE TRANSPORT ROUTIER DESTINÉ À AMÉLIORER LA SÉCURITÉ DES USAGERS

(30) Priority: 20.04.2018 RU 2018114736
(43) Date of publication of application: 24.02.2021
(73) Proprietor: Vipland Holdings OÜ, 75301 Harju maakond (EE)
(72) Inventor: FILYAROVSKII, Yan Aduardovich, Moscow, 119121 (RU)
(74) Representative: Jeck, Anton
(86) International application number: PCT/RU2019/000027
(87) International publication number: WO 2019/203685

(56) References cited:
- EP-A1- 3 192 383
- WO-A1-2011/061663
- WO-A1-2012/151642
- BR-A2-102015 004 658
- US-A- 4 774 642
- US-B1- 6 558 016

## Description

### FIELD OF INVENTION

The present invention relates to protective clothing with luminous safety means, as well as to optical signaling devices installed on vehicles to indicate the dimensions of the vehicles or vehicle parts and to provide light signals to other vehicles, and is applicable to provide the light signals on special-service equipment and children's clothing.

### SUMMARY

The technical result of the claimed group of inventions is to extend functionalities, increase traffic safety for users of bodyless vehicles, provide improved visibility of bodyless vehicle drivers and children on the road, as well as to provide child and driver protection, prevent road traffic accidents, place special-service markings on equipment (STSI, RosAvtoDor, RZD, EMERCOM, Miners, Energy Services, Builders, any other special services, etc.), and ensure an improved efficiency factor of safety measures when working in hazardous locations.

### DETAILED DESCRIPTION OF THE PREFERRED EMBODIMENT

The above-posed problem is solved and the technical result is achieved by means of a road transport signaling system for enhancing safety for users of bodyless vehicles as defined in claim 1 and by the method of claim 2.

The system of the present invention includes luminous elements that duplicate signals of conventional optical signaling devices of a vehicle, wherein a device for providing controlled optical signals comprises light indicators: left and right turn signals, combined stop signal, parking lights, running lights, flexible neon light, wherein the light indicators are equipped with fasteners for mounting/fastening and dismounting the light indicators on and from items of pilot equipment and vehicle parts, and wherein Unit 2 is configured to power and control the light indicators. Unit 2 is powered by battery cells, batteries (AA, AAA, etc.), but meanwhile, its operation and/or charging from solar cell modules is also possible. The solar cell modules may be mounted in that place where they are easily accommodated - for example, on the pilot equipment or a backpack. The light indicators may be made on the basis of incandescent lamps, light emitting diodes (LEDs), light guides, neon lamps, LED matrices and matrices of light emitting devices, flexible screens, and are equipped with special fasteners for mounting/fastening and dismounting the light indicators on and from the items of any special equipment, clothing, helmets, backpacks, bags, motorcycle elements, a scooter, quadricycle, tricycle, motodrone/Hoversurf (flying motorcycle) and other bodyless vehicles, including waterborne vehicles, etc. Unit 1 includes a device (transmitter) for short-range data transmission via radio channels and/or other wireless signal or data transmission channels (transmitted data may be digital messages or analog signals coming from a data source, digitized into a bit stream using pulse-code modulation (PCM) or more advanced coding schemes for the data source (analog-to-digital conversion and data compression). Each unit is provided with its own individual code hardware-written in a device circuit. The data source/signal transmitter is coded and decoded by a codec/programmer or other coding means. At the same time, electronic or analog filters and electrical surge and interference protection systems are installed in each unit, since an electrical system of, for example, a motorcycle is very unstable and operates often intermittently, which is detrimental to fine-tuned devices. Voltage surge suppression is achieved by using voltage stabilizers (for example, stabilizer 7805) in power and signal pickup circuits and is intended for the operational stability of a wireless transmitter circuit. These circuits do not have a noticeable effect on a motorcycle circuit.

Unit 1 is installed in an electrical light signaling system of the motorcycle (usually in the electrical isolation of a tail lamp), scooter, quadricycle, tricycle and other bodyless vehicles. For waterborne and airborne vehicles, it is possible to work with a gyroscope (either built-in or via an application on a smartphone). The device is powered by the vehicle or its own battery or replaceable batteries. Unit 1.2 includes a device for remote manual control and short-range data transmission via radio channels and/or other wireless signal/data transmission channels (transmitted data may be digital messages or analog signals coming from a data source, digitized into a bit stream, using the pulse-code modulation (PCM) or more advanced coding schemes for the data source (the analog-to-digital conversion and data compression), and made as a button-, voice- or touch-controlled device, wherein Unit 1.2 is powered by the vehicle or by its own battery or replaceable batteries.

Unit 2 (6) includes a receiving device for short-range data transmission via radio channels (a control device for light elements), each unit being provided with its own individual code hardware-written in the device circuit. Unit 1 - and Unit 2 are interconnected and operate with each other in the same frequency range. Unit 2 (6) is equipped with: an electronic device for "learning" a unique code outgoing from/belonging to Unit 1, thereby providing increased use and distribution of the devices and avoiding the need to contact a manufacturer to encode a certain set; a battery compartment; a battery charging system; a control unit and a unit for synchronously repeating, by its own light elements, the light signals of the bodyless vehicles; a controller for controlling neon light elements and controlling a geolocation unit. An electronic part of Unit 2 (6) is provided with a system for reducing energy consumption without brightness loss of the light elements. The GPS geolocation unit (GSM/GPRS tag or SIM card) includes a beacon for tracking a pilot or vehicle, the GPS unit transmitting a SOS signal to phone numbers predefined by a user, in order to automatically notify when a subject is in danger. In the meantime, it is possible to track movements of the pilot in real time by coordinating data from a GPS sensor with maps. Unit 3 includes a device with a display for indicating a power level of the battery of the receiving device, current time, air temperature, an operation indicator of the GPS tag. A collision sensor and a GSM tag are mounted in Unit 3, the GSM tag showing where the pilot is and transmitting, in case of an accident, the SOS signal and turning on emergency lighting on the equipment. Unit 3 is further equipped with its battery and its charging system, the unit being further equipped with fasteners for its mounting/fastening on and dismounting from the items of the equipment and the elements of the bodyless vehicles or a pilot body. It is also possible to use a lighting sensor, which may be mounted in Unit 3 or installed on the equipment. The lighting sensor automatically turns off the parking lights and/or running lights when the amount of the lighting changes inversely to good lightning.

Unit 3 is also provided with an emergency collision/rollover/fall sensor, which is triggered by a force of impact and/or by means of a wire rope with a safety pin, the safety pin being attached to motorcycle handlebars and on a pilot wrist. When the sensor is triggered, a bright emergency stop light/SOS signal (for example, a strobe) is turned on to provide visibility and detection of the pilot, the SOS signal being transmitted via the GSM tag, and an engine of the bodyless vehicle is configured, in case of emergency, to be shut down/turned off/cut off if the collision sensor is triggered and, in case the safety pin is provided, the safety pin is taken out using a safety cord. What is also provided are a button for turning on/off the system, which is mounted on the equipment, and a set of connecting wires, adapters and mounts for mounting and dismounting the road transport signaling system.

When using such a bodyless vehicle as a motorcycle, Unit 1 is a device transmitting current motorcycle signals via radio communications or by wire, is provided with a circuit for receiving/transmitting incoming signals from the motorcycle to Unit 2/a radio receiver (receiving device for short-range data transmission over radio channels in state-authorized frequency ranges) or through a wired system.

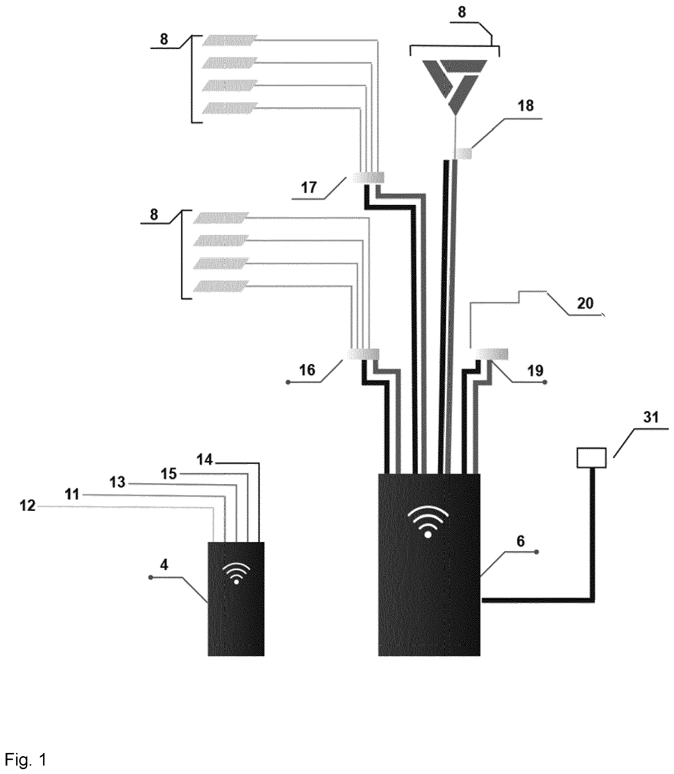

Unit 1 is equipped, at the output of an electronic transceiver circuit, with wires that are connected in the tail lamp compartment of the motorcycle based on a circuit appended to the unit. Accordingly, power is supplied to a power wire (Unit 1 is powered when the motorcycle mode is on (ignition ON), to left turn and right turn signal wires, as well as to stop signal wires (see FIG. 1). Unit 1 may also be connected to the vehicle in any other place suitable for its mounting according to the existing circuit. When the motorcycle ignition is in the ON position, power is supplied to the input of a transmission line (wireless, consisting of a transmitter and receiver, or wired (without a radio transmitting device)), for which reason the transmission line turns on automatically. Next, a current state signal of signal lights is fed from the motorcycle circuit, and the transmission line transmits the signal to the control device for the signal elements (Unit 2), which is turned on by a remote button mounted on the equipment. According to the incoming motorcycle signals, the control device for the signal elements synchronously turns on, turns off or changes the brightness of its own corresponding light elements. The light elements responsible for the parking lights or running lights are constantly on and are powered by Unit 2.

When using such a bodyless vehicle as a bicycle and other vehicles not equipped with their own electrical signaling devices, the signaling set of Unit 1 is made as a device/remote control for manual data transmission. Unit 1 is fastened mainly on a vehicle steering wheel, but its holding or fastening in the pilot hand or on the pilot equipment is also possible. The device is powered by the vehicle or its own battery or replaceable batteries. An electronic chip having programmed options for glowing the light elements is also installed here, the electronic chip being also configured to control the light elements.

Unit 2 and the light elements/Signaling set mounted on the equipment, backpack or vehicle elements (installed anywhere at the request of the user) are switched by the user to the ON position by using the remote button of the signaling set, and the remote button is also used to select the operational mode of the signaling set.

Next, the user starts moving/an operational process.

A set of lights operates in the following several modes:
1. The parking/running lights and movement signals (stop signal, right and left turn signals).
2. The parking/running lights in a constant lighting mode
3. The parking/running lights in a flickering mode

The operational modes of the signaling set are selected by means of switching via the remote control (Unit 1).

Children's signaling sets, their light elements, may be made in any form, using children's symbols, animals or heroes of children's fairy tales, movies, etc. This set uses modified Unit 2 - it does not use a radio receiving system but has an electronic chip with programmed options for glowing the light elements, with the electronic chip being configured to control the light elements. The user switches Unit 2 to the ON position by using the remote button of the set, with the remote button being also configured to select the operational mode of the set.

Next, the user starts using the set at his/her discretion.

The same operational principle is applied in the sets of the road transport signaling system for special services. In this case, the same light elements are not made in the children's stylistics, and the set uses different programming for providing the light signals - for each special service these programs are written individually.

All connecting cables, adapters, control buttons and housings of Unit 1, Unit 2, Unit 3 are coated with moisture-resistant protective materials.

### BRIEF DESCRIPTION OF THE DRAWINGS

The accompanying figures show the following:
FIG. 1 - a connection diagram

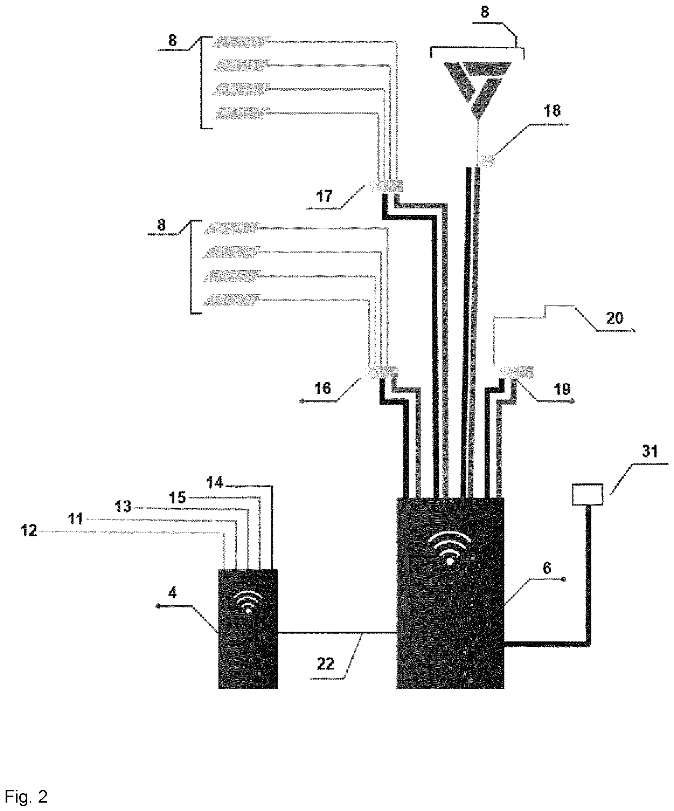

FIG. 2 - a wireless connection diagram

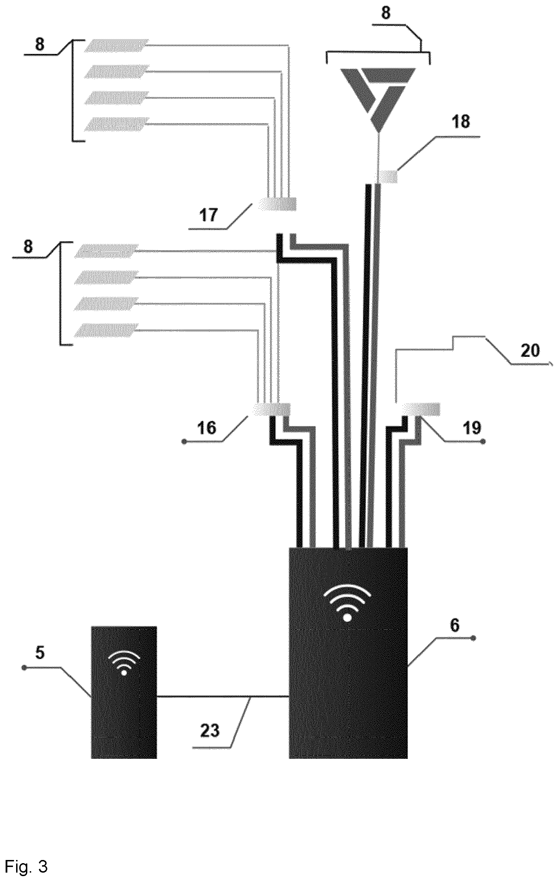

FIG. 3 - a diagram for a bicycle

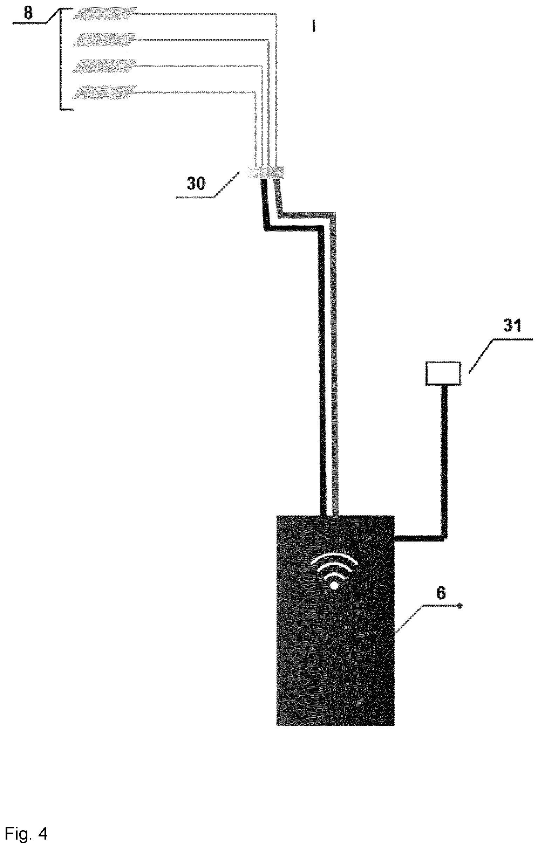

FIG. 4 - a connection diagram for children and special services

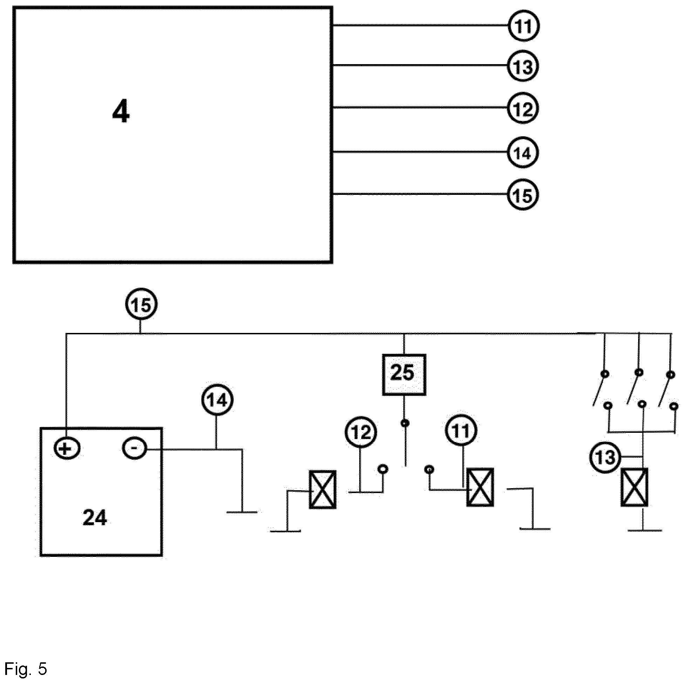

FIG. 5 - a Unit 1-to-vehicle connection diagram

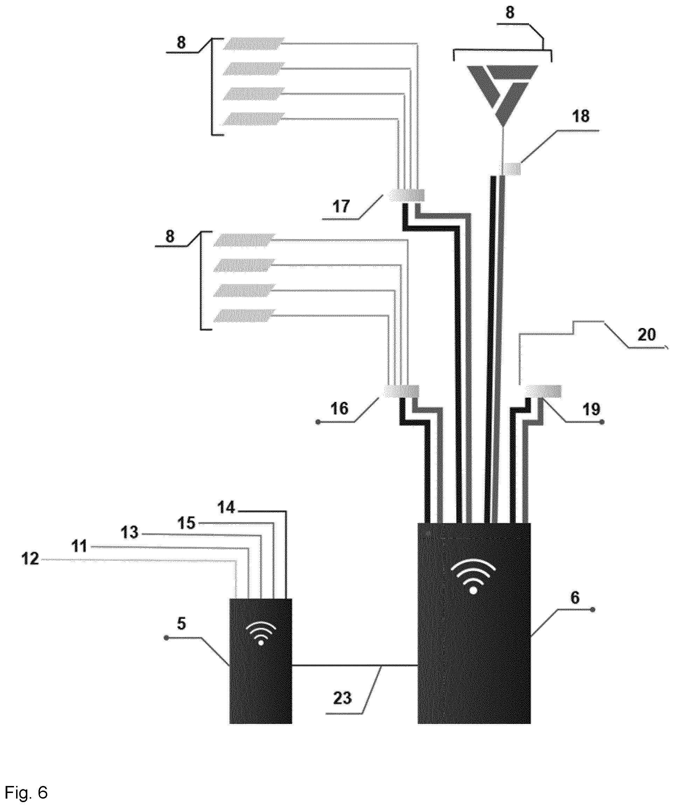

FIG. 6 - a wired diagram for the bicycle

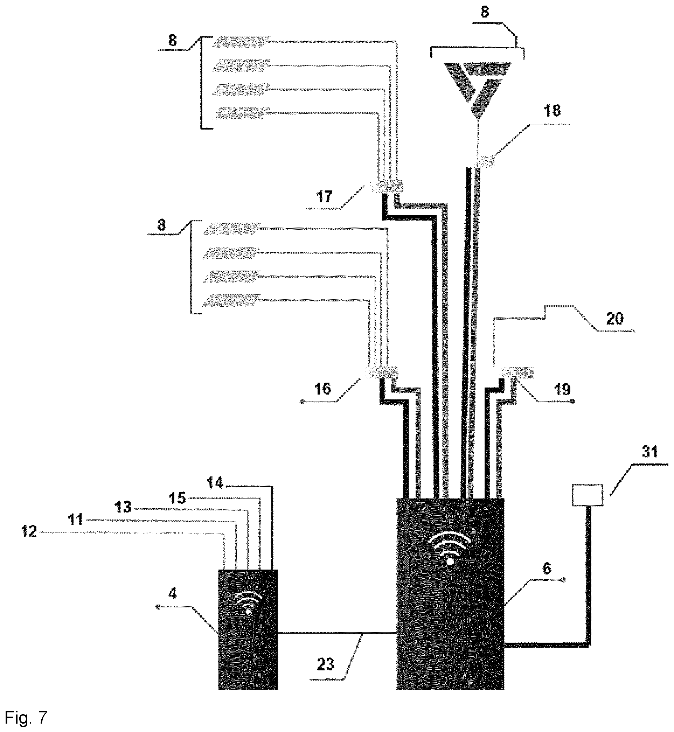

FIG. 7 - a wired diagram

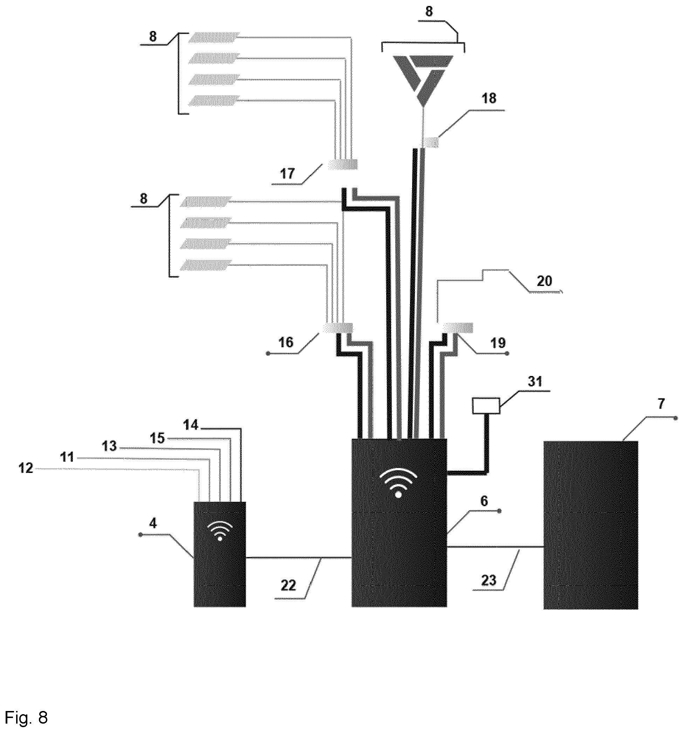

FIG. 8 - a diagram with Unit 3

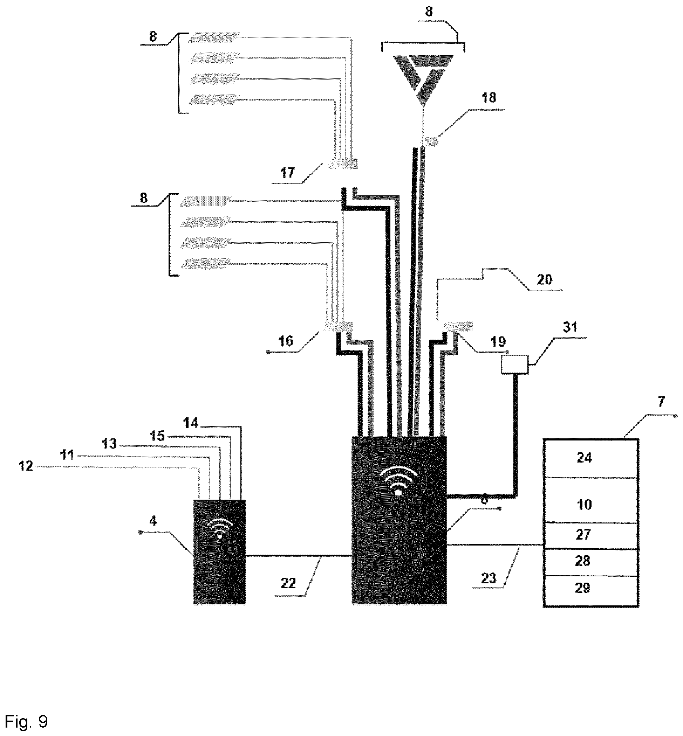

FIG. 9 - a diagram with Unit 3

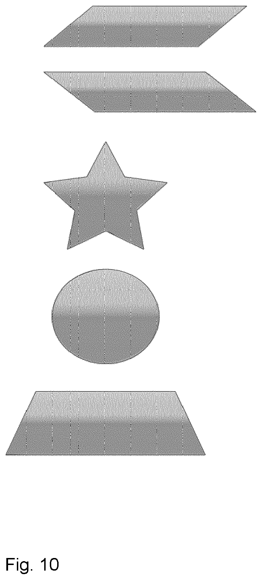

FIG. 10 - shapes and types of light-emitting elements

The list of references:
Ref. 1 - a vehicle equipped with light signals
Ref. 2 - a vehicle not equipped with light signals
Ref. 3 - vehicle lighting devices
Ref. 4 - Unit 1
Ref. 5 - Unit - 1.1
Ref. 6 - Unit 2
Ref. 7 - Unit 3
Ref. 8 - light-emitting elements
Ref. 9 - shapes and types of the light-emitting elements
Ref. 10 - a GSM tag
Ref. 11 - a right turn
Ref. 12 - a left turn
Ref. 13 - a stop signal
Ref. 14 - ground (electrical grounding)
Ref. 15 - power 12 V +
Ref. 16 - a connection line for left-turn indicators
Ref. 17 - a connection line for right-turn indicators
Ref. 18 - a connection line for the stop signal
Ref. 19 - a connection line for parking and running lights
Ref. 20 - a connection line for neon lights
Ref. 21 - a Unit 1-to-Unit 2 connection line
Ref. 22 - wireless data transmission
Ref. 23 - wired data transmission
Ref. 24 - a power supply/battery
Ref. 25 - a light signal relay
Ref. 26 - equipment items
Ref. 27 - a display of Unit 3
Ref. 28 - a lighting sensor
Ref. 29 - a collision sensor
Ref. 30 - a connection line for the signal lights (children's equipment and special-service equipment)
Ref. 31 - a remote control button

## Claims

1. A road transport signaling system for enhancing safety for drivers/users of bodyless vehicles (1, 2), comprising luminous elements that duplicate signals of conventional optical signaling devices of a vehicle, **characterized in that** the road transport signaling system comprises a device for providing controlled optical signals, the device comprising:
light indicators: left and right turn signals (16, 17), combined stop signal (18), parking lights (19), running lights (19), flexible neon light (20), wherein the light indicators are equipped with fasteners for mounting/fastening and dismounting the light indicators on and from items of driver equipment (26) and vehicle parts, and wherein a Unit 2 (6) is configured to power and control the light indicators, Unit 2 (6) being powered by battery cells or batteries;
Unit 1 (4) including a device (transmitter) for short-range data transmission via radio channels, wherein Unit 1 (4) is provided with its own individual code hardware-written in a device circuit, and Unit 1 (4) is equipped with electronic filters and electrical surge and interference protection systems, and Unit 1 (4) is installed in an electrical light signaling system of the bodyless vehicles;
Unit 1.2 including a device for remote manual control and short-range data transmission via radio channels, wherein Unit 1.2 is provided with its own individual code hardware-written in the device circuit, and Unit 1.2 is made as a button-, voice- or touch-controlled device, wherein Unit 1.2 is powered by the vehicle or its own battery or replaceable batteries;
Unit 2 (6) (a control device for light elements) including a receiving device (receiver) for short-range data transmission from Unit 1 (4) via radio channels, each Unit being provided with its own individual code hardware-written in the device circuit;
wherein Unit 1 and Unit 2 are interconnected and operate with each other in the same frequency range;
wherein Unit 2 (6) is equipped with an electronic device with a unique code outgoing from/belonging to Unit 1 (4), a battery compartment, a battery charging system, a control unit and a unit for synchronously repeating, by its own light elements, the light signals of the bodyless vehicles, a controller for controlling neon light elements and controlling a geolocation unit,
wherein an electronic part of Unit 2 (6) is provided with a system for reducing energy consumption without brightness loss of the light elements;
a GPS geolocation unit (10), (GSM/GPRS tag or SIM card) including a beacon for tracking a pilot or the vehicle, the GPS unit (10) transmitting a SOS signal to phone numbers predefined by a user, in order to automatically notify when a subject is in danger, wherein it is possible to track movements of the pilot in real time by coordinating/combining data from a GPS sensor with maps;
Unit 3 (7) including a device with a display for indicating and showing a power level of the battery of the receiving device, current time, air temperature, an operation indicator of the GPS tag, wherein a collision sensor and a GSM tag are mounted therein, the GSM tag showing where the pilot is and transmitting, in case of an accident, the SOS signal and turning on emergency lighting on the equipment (26), wherein the unit is further equipped with its battery and its charging system, the unit being further equipped with fasteners for its mounting/fastening on and dismounting from the items of the equipment (26) and the parts of the bodyless vehicles;
a lighting sensor (28), which is mounted in Unit 3 (7) or installed on the equipment (26), wherein the lighting sensor is adapted to be triggered in case of changes in lighting, and when lighting changes to poor lighting the lighting sensor (28) is adapted to cause the parking lights and/or running lights to be turned on if the parking lights and/or running lights are turned off at the instant of said changes in lighting, and wherein the sensor is adapted to automatically turn off the parking lights (19) and/or running lights (19) if a lighting amount changes inversely to good lighting;
an emergency collision/rollover/fall sensor (29), which is adapted to be triggered by a force of impact and/or by means of a wire rope with a safety pin, the safety pin being attached to motorcycle handlebars and on a pilot wrist, wherein when the sensor is triggered, a bright SOS emergency stop light signal (for example, a strobe) is turned on to provide visual detection of the pilot, the SOS signal being transmitted via the GSM tag, and wherein an engine of the bodyless vehicle is configured, in case of emergency, to be shut down/turned off/cut off if the collision sensor is triggered and, in case the safety pin is provided, the safety pin is taken out using a safety cord;
a button/device for turning on/off the system, which is mounted on the equipment (26) or installed in Unit 3 (7);
a set of connecting wires, adapters and mounts.

2. A method of operating a road transport signaling system according to claim 1 to enhance safety for users of bodyless vehicles, comprising supplying power to an input of a transmission line (wireless, consisting of a transmitter and receiver, or wired (without a radio transmitting device)) when turning on an ignition of a bodyless vehicle and automatically triggering the system, wherein a current state signal of signal lights is next fed from an electric/electronic circuit of the bodyless vehicle, and the transmission line transmits the signal to a control device for signal elements (Unit 2), which is turned on by a remote button installed on equipment or on Unit 3 (7), and wherein according to the incoming signals of the vehicle, the control device for the signal elements synchronously turns on, turns off or changes a brightness of corresponding light elements, the light elements responsible for parking/running lights being constantly on and powered by Unit 2 (6).

## Patentansprüche

1. Straßentransport-Signalsystem zur Erhöhung der Sicherheit für Fahrer/Benutzer von karosserielosen Fahrzeugen (1, 2), mit Leuchtelementen, die Signale herkömmlicher optischer Signaleinrichtungen eines Fahrzeugs duplizieren, **dadurch gekennzeichnet, dass** das Straßentransport-Signalsystem eine Vorrichtung zur Bereitstellung gesteuerter optischer Signale umfasst, wobei die Vorrichtung Folgendes umfasst:
Lichtanzeiger: linke und rechte Blinker (16, 17), kombiniertes Haltesignal (18), Standlicht (19), Fahrlicht (19), flexibles Neonlicht (20), wobei die Lichtanzeiger mit Befestigungselementen zum Anbringen und Abnehmen der Lichtanzeiger an und von Fahrerausrüstungsgegenständen (26) und Fahrzeugteilen ausgestattet sind, und wobei eine Einheit 2 (6) zur Versorgung und Steuerung der Lichtanzeiger ausgebildet ist, wobei die Einheit 2 (6) durch Batteriezellen oder Batterien versorgt wird;
Einheit 1 (4) mit einer Einrichtung (Sender) zur Datenübertragung über Funkkanäle im Nahbereich, wobei die Einheit 1 (4) mit einem eigenen individuellen Code versehen ist, der in einer Geräteschaltung hardwaremäßig geschrieben ist, und die Einheit 1 (4) mit elektronischen Filtern und elektrischen Überspannungs- und Störungsschutzsystemen ausgestattet ist, und die Einheit 1 (4) in ein elektrisches Lichtsignalsystem der karosserielosen Fahrzeuge eingebaut ist;
Einheit 1.2 einschließlich einer Vorrichtung zur manuellen Fernsteuerung und Datenübertragung über Funkkanäle mit kurzer Reichweite, wobei die Einheit 1.2 mit einem eigenen individuellen Code versehen ist, der in die Geräteschaltung eingeschrieben ist, und die Einheit 1.2 als knopf-, sprach- oder berührungsgesteuerte Vorrichtung ausgeführt ist, wobei die Einheit 1.2 durch das Fahrzeug oder eine eigene Batterie oder austauschbare Batterien gespeist wird;
Einheit 2 (6) (eine Steuervorrichtung für Lichtelemente) mit einer Empfangsvorrichtung (Empfänger) für die Kurzstrecken-Datenübertragung von Einheit 1 (4) über Funkkanäle, wobei jede Einheit mit einem eigenen individuellen, in die Geräteschaltung eingeschriebenen Code versehen ist;
wobei Einheit 1 und Einheit 2 miteinander verbunden sind und miteinander im gleichen Frequenzbereich arbeiten;
wobei die Einheit 2 (6) mit einer elektronischen Vorrichtung mit einem eindeutigen Code, der von der Einheit 1 (4) ausgeht/zu ihr gehört, einem Batteriefach, einem Batterieladesystem, einer Steuereinheit und einer Einheit zur synchronen Wiederholung der Lichtsignale der karosserielosen Fahrzeuge durch ihre eigenen Lichtelemente, einem Controller zur Steuerung von Neonlichtelementen und zur Steuerung einer Geolokalisierungseinheit ausgestattet ist,
wobei ein elektronischer Teil der Einheit 2 (6) mit einem System zur Reduzierung des Energieverbrauchs ohne Helligkeitsverlust der Leuchtelemente versehen ist;
eine GPS-Geolokalisierungseinheit (10) (GSM/GPRS-Etikett oder SIM-Karte) mit einer Bake zum Verfolgen eines Piloten oder des Fahrzeugs, wobei die GPS-Einheit (10) ein SOS-Signal an von einem Benutzer vordefinierte Telefonnummern sendet, um automatisch zu benachrichtigen, wenn ein Subjekt in Gefahr ist, wobei es möglich ist, Bewegungen des Piloten in Echtzeit zu verfolgen, indem Daten von einem GPS-Sensor mit Karten koordiniert/kombiniert werden;
Einheit 3 (7), die eine Vorrichtung mit einem Display zum Anzeigen und Darstellen eines Energiepegels der Batterie der Empfangsvorrichtung, der aktuellen Zeit, der Lufttemperatur, einer Betriebsanzeige des GPS-Tags umfasst, wobei ein Kollisionssensor und ein GSM-Tag darin angebracht sind, wobei das GSM-Tag anzeigt, wo sich der Pilot befindet, und im Falle eines Unfalls das SOS-Signal sendet, das SOS-Signal und das Einschalten der Notbeleuchtung an der Ausrüstung (26), wobei die Einheit ferner mit ihrer Batterie und ihrem Ladesystem ausgestattet ist, wobei die Einheit ferner mit Befestigungsmitteln für ihre Anbringung/Befestigung an und ihre Demontage von den Teilen der Ausrüstung (26) und den Teilen der karosserielosen Fahrzeuge ausgestattet ist;
einen Beleuchtungssensor (28), der in der Einheit 3 (7) angebracht oder an der Ausrüstung (26) installiert ist, wobei der Beleuchtungssensor so ausgelegt ist, dass er im Falle von Änderungen der Beleuchtung ausgelöst wird, und wenn sich die Beleuchtung zu einer schlechten Beleuchtung ändert, der Beleuchtungssensor (28) so ausgelegt ist, dass er bewirkt, dass die Standlichter und/oder die Fahrlichter eingeschaltet werden, wenn die Standlichter und/oder die Fahrlichter zum Zeitpunkt der Änderungen der Beleuchtung ausgeschaltet sind, und wobei der Sensor die Standlichter (19) und/oder die Fahrlichter (19) automatisch ausschaltet, wenn sich eine Beleuchtungshelligkeit hingegen verbessert;
einen Notfallsensor für Kollisionen/Überschläge/Stürze (29), der so ausgelegt ist, dass er durch eine Aufprallkraft und/oder mittels eines Drahtseils mit einem Sicherheitsstift ausgelöst wird, wobei der Sicherheitsstift am Motorradlenker und an einem Pilotenhandgelenk befestigt ist, wobei, wenn der Sensor ausgelöst wird, ein helles SOS-Notfall-Stopplichtsignal (z.B., ein Stroboskop) eingeschaltet wird, um eine visuelle Erfassung des Piloten bereitzustellen, wobei das SOS-Signal über das GSM-Tag übertragen wird, und wobei ein Motor des karosserielosen Fahrzeugs so konfiguriert ist, dass er im Notfall abgeschaltet/ausgeschaltet/abgeschnitten wird, wenn der Kollisionssensor ausgelöst wird, und, falls der Sicherheitsstift vorgesehen ist, der Sicherheitsstift unter Verwendung einer Sicherheitsschnur herausgenommen wird;
eine Taste/Vorrichtung zum Ein-/Ausschalten des Systems, die an der Ausrüstung (26) angebracht oder in der Einheit 3 (7) installiert ist;
einen Satz von Anschlusskabeln, Adaptern und Halterungen.

2. Verfahren zum Betreiben eines Straßenverkehrssignalsystems nach Anspruch 1, um die Sicherheit für Benutzer von körperlosen Fahrzeugen zu erhöhen, umfassend das Zuführen von Strom zu einem Eingang einer Übertragungsleitung (drahtlos, bestehend aus einem Sender und einem Empfänger, oder verdrahtet (ohne eine Funksendevorrichtung)), wenn eine Zündung eines körperlosen Fahrzeugs eingeschaltet wird und das System automatisch ausgelöst wird, wobei ein aktuelles Zustandssignal von Signallichtern als nächstes von einer elektrischen/elektronischen Schaltung des körperlosen Fahrzeugs eingespeist wird, und die Übertragungsleitung das Signal an eine Steuervorrichtung für Signalelemente (Einheit 2) weiterleitet, die durch einen an der Ausrüstung oder an der Einheit 3 (7) installierten Ferntaster eingeschaltet wird, und wobei die Steuervorrichtung für die Signalelemente entsprechend den eingehenden Signalen des Fahrzeugs synchron entsprechende Lichtelemente einschaltet, ausschaltet oder in ihrer Helligkeit verändert, wobei die für das Stand-/Lauflicht zuständigen Lichtelemente ständig eingeschaltet sind und von der Einheit 2 (6) versorgt werden.

## Revendications

1. Système de signalisation de transport routier pour l'augmentation de la sécurité des conducteurs/des utilisateurs de véhicules dépourvus de carrosserie (1,2) avec des éléments lumineux dupliquant les signales de signalisations classiques optiques d'un véhicule est caractérisé de sorte que le système de signalisation du transport routier comporte un dispositif pour le déploiement de signales optiques guidés où le dispositif comporte ce qui suit:
Des signaux lumineux: des cuillers gauches et droitiers (16,17), un signal de maintien combiné (18), un feu de stationnement (19), un phare (19), un éclairage de néon flexible (20) où les signaux lumineux sont munis d'attaches pour la fixation et le détachement des signaux lumineux et des équipements du conducteur (26) ainsi que des pièces détachées où une unité 2 (6) est formée pour l'alimentation et la commande des signaux lumineux où l'unité 2 (6) est alimentée par des cellules de batteries ou le cas échant par des batteries;
Unité 1 (4) avec un dispositif (émetteur) pour la transmission des données via des canaux radio à courte portée où l'unité 1 (4) est munie d'un propre code individuel qui est écrit physiquement dans un circuit de l'appareil et l'unité 1 (4) est munie de filtres électroniques et des systèmes de protection contre les surtensions et les interférences et l'unité 1 (4) est incorporée dans un système de signalisation lumineuse de véhicules dépourvus de carrosserie;
Unité 1.2 y inclus un dispositif pour la commande manuelle à distance et pour la transmission des données via des canaux radio de courte portée où l'unité 1.2 est munie d'un propre code individuel qui est écrit dans un circuit de l'appareil et l'unité 1.2 est exécutable en qualité de dispositif de bouton, d'appareil vocal et en qualité de dispositif de commande tactile où l'unité 1.2 est alimentée par le biais du véhicule ou le cas échéant par le biais d'une propre batterie ou le cas échéant par le biais de batteries remplaçables;
Unité 2 (6) (un dispositif de commande pour les éléments lumineux) avec un dispositif de réception (un récepteur) pour la transmission des données de courtes distances de l'unité 1 (4) via des canaux radio où chaque unité est munie d'un propre code individuel écrit dans un circuit de l'appareil;
Où l'unité 1 et l'unité 2 sont reliées l'une à l'autre et fonctionnent ensemble dans la même bande de fréquences;
Où l'unité 2 (6) est munie d'un dispositif électronique avec un code unique sortant de l'unité 1 (4) / ou appartient à l'unité, d'un boîtier de batteries, d'un système de charge de batteries, d'une unité de commande et d'une unité de la retransmission synchrone des signaux lumineux des véhicules dépourvus de carrosserie par le biais de propres éléments lumineux, d'une manette pour la commande de l'éclairage au néon et pour la commande d'une unité de géolocalisation,
Où une partie électrique de l'unité 2 (6) est munie d'un système pour la réduction de la consommation énergétique sans perte de luminosité des éléments lumineux;
Une unité GPS de géolocalisation (10) (une étiquette GSM/GPRS ou le cas échéant une carte SIM) avec une balise pour la pourchasse d'un pilote ou d'un véhicule où l'unité GPS (10) émette un signal SOS à des numéros de téléphone prédéfinis par l'utilisateur pour avertir automatiquement si un sujet se trouve en danger où il est possible de suivre les mouvements du pilote en temps réel où les données sont coordonnées/combinées par un capteur GPS avec des cartes;
Unité 3 (7) comportant un dispositif avec un display pour l'affichage et la visualisation du niveau énergétique de la batterie du dispositif de réception, de l'heure actuelle, de la température de l'air, du voyant d'alimentation des balises GPS où un capteur de collision et un tag GPS y sont disposés où le tag GSM affiche où le pilote se situe et en cas d'incident il envoie un signal SOS et active l'éclairage d'urgence à l'équipement (26) où l'unité est munie également de sa batterie et de son système de charge où l'unité est munie également de moyens de fixation pour l'installation/la fixation et pour le démontage de parties de l'équipement (26) et de parties des véhicules dépourvus de carrosserie;
Un capteur d'éclairement (28) disposé au niveau de l'unité 3 (7) ou le cas échéant au niveau de l'équipement (26) où le capteur d'éclairement est conçu de sorte qu'il se déclenche dans le cas du changement de l'éclairage et que si l'éclairage se change en un mauvais éclairage, le capteur d'éclairement (28) est conçu de sorte qu'il entraîne à ce que les veilleuses et/ou les feux de croisement s'allument si les veilleuses et/ou les feux de croisement se désactivent au moment des changements de l'éclairage et où le capteur désactive automatiquement les veilleuses (19) et/ou les feux de croisement (19) si la luminosité d'éclairage se détériore;
Une balise de détresse pour les collisions/les vrilles/les chûtes (29) qui est conçue de sorte qu'elle se déclenche par une force d'impact et/ou par le biais d'un câble métallique muni d'une goupille où la goupille est fixée au guideau et à un poignet-pilote où un signal vif de frein holographique d'urgence SOS (à titre d'exemple un stroboscope) s'active si le capteur se déclenche pour fournir une détection visuelle du pilote où le signal SOS est transmis via le tag GSM et où un moteur du véhicule dépourvu de carrosserie est configuré de sorte qu'il est désactivé/éteint/tronqué en cas d'urgence si le capteur de collision se déclenche et si la goupille au moyen d'un cordon de sécurité est retirée dans le cas où elle est prévue;
Une touche/un dispositif pour l'activation/la désactivation du système intégré à l'équipement (26) ou le cas échéant installé au niveau de l'unité 3 (7);
Un bloc de câbles de connexion, d'adaptateurs et de supports.

2. Procédé pour le fonctionnement d'un système de signaux utilisés pour la circulation routière selon la revendication 1 pour augmenter la sécurité de véhicules désincarnés pour les utilisateurs comportant l'alimentation en énergie à une entrée de ligne de transmission (par voie hertzienne consistant d'un émetteur et d'un récepteur ou le cas échant filaire (sans un appareil de transmission radio)) si l'allumage d'un véhicule désincarné s'active et le système se déclenche automatiquement où un signal d'état à jour est alimenté ensuite de longueurs d'onde de signaux lumineux de commutation électrique/électronique du véhicule désincarné et la ligne de transmission transmet le signal vers un dispositif de commande pour des éléments de signalisation (unité 2) s'allumant par le biais d'un bouton-poussoir installé à l'équipement ou le cas échéant à l'unité 3 (7) où le dispositif de commande pour les éléments de signalisation met en marche, éteint ou modifie la luminosité à titre synchrone des éléments lumineux en fonction des signales entrants du véhicule où les éléments lumineux en charge du feu de position/du feu chassant sont activés en continu et sont alimentés par l'unité 2 (6).
